# EUROPEAN PATENT APPLICATION

(11) **EP 4 321 308 A1**
(43) Date of publication of application: **14.02.2024**
(21) Application number: 22189340.7
(22) Date of filing: 08.08.2022
(51) Int. Cl.: B25J 9/16

(54) **METHOD FOR RECOMMISSIONING A ROBOT AND ROBOT**

(71) Applicant: Neura Robotics GmbH, 72555 Metzingen (DE)
(72) Inventor: KASRUNG, Sagar, 72762 Reutlingen (DE); REGER, David, 72555 Metzingen (DE)
(74) Representative: Westphal, Mussgnug & Partner Patentanwälte mbB

(57) **Abstract**

A method (100) for recommissioning a robot (10), comprising the following steps:
• determining at least one first operating condition in a first setting (30), comprising the robot (10) and a first working environment (32) of the robot (10),
• taking the robot (10) out of the first working environment (32),
• placing the robot (10) in a second working environment (42),
• determining at least one second operating condition in a second setting (40), comprising the robot (10) and the second working environment (42),
• assessing the second setting (40), conducting a comparison of the at least one second operating condition with the corresponding at least one first operating condition,
and robot (10) configured to conduct at least a part of the method (100).

## Description

The present invention relates to a method for recommissioning a robot as well as a robot which is configured to conduct at least a part of such a method.

Robots, in particular industrial robots, are typically used for carrying out a specific task in a specific and well-defined working environment. In case, the task comprises a collaboration with a human operator, for example a stay in the same workspace or a direct hand over of a workpiece, the robot is called a "collaborative robot".

As per European Machine Directive 2006-42-EC a collaborative robot is considered as incomplete machinery. Therefore, certifications like the CE-marking correspond not only to the robot but to the whole setting, comprising the robot in its specific working environment. As a consequence, the robot will lose its operating permit when it is taken out of its defined and certified working environment. Thus, every substantial change of the setting, whether through a change of the working environment or through a change of the characteristics of the robot, results necessarily in new certification process of the changed setting.

The certification is usually conducted once when taking over the robot from the manufacturer in the course of commissioning the robot at the integrator's site. Over time, there may arise new tasks and fields of application in which the robot could be used, whereas the original tasks of the robot may become less important. As a robot usually is able to perform multiple tasks in many applications, it may be useful to shut down the robot in its first working environment and to recommission it in a new working environment. With the upcoming of more and more powerful lightweight robots which can be easily transported from one to another working environment, the recommissioning of robots gains an increased importance.

However, as the certification process, which becomes necessary with each recommissioning, typically comes along with a huge effort, integrators often avoid to recommission the robot in a different setting, even though it would be useful in terms of resource utilization.

In addition, the safety concern is another of the main factors to stop integrators from recommissioning robots. The created risk assessment criteria, the caused severe injuries to operators and surroundings by a wrong risk assessment of a robot, in particular a collaborative robot, and the dependence on skills of operators and maintenance engineers have also an impact on decision-makers. Otherwise, onerous procedures in the production line, tasks performed for recommissioning, rigorous safety criteria, and tons of documentation result in a costconsuming recommissioning process.

Therefore, the objective of the present invention is to reduce efforts as performing recommissioning activity, and shorten the recommissioning cycle.

According to the invention, the objective is achieved by a method for recommissioning a robot with the features of claim 1. The objective is also achieved by a robot with the features of claim 11.

Advantageous embodiments of the invention are described in the dependent claims.

According to the invention, a method for recommissioning a robot comprises the following steps:
- determining at least one first operating condition in a first setting, comprising the robot and a first working environment of the robot,
- taking the robot out of the first working environment,
- placing the robot in a second working environment,
- determining at least one second operating condition in a second setting, comprising the robot and the second working environment,
- assessing the second setting, conducting a comparison of the at least one second operating condition with the corresponding at least one first operating condition.

As can be understood from the wording used, the first setting and the second setting respectively comprise the robot and the corresponding first or second working environment. Preferably, the terms "first working environment" and "second working environment" respectively comprise the corresponding setting without the robot. In particular, the respective working environment may comprise all factors which are relevant with regard to the robot and its application but are not related to the robot as such.

The process of taking the robot out of the first working environment and placing it in the second working environment can be realized for example by moving the robot itself from the first working environment to the second environment. In this case, the robot is preferably shut down before taking it out from the first working environment and restarted after placing it in the second working environment. Also, the first working environment can be converted to the second working environment by changing the first working environment itself. In this case, the robot is not necessarily moved from one place to another but can stay at the original location.

The assessment of the second setting based on the comparison of the at least one second operating condition with the corresponding at least one first operating condition has the effect that the at least one second operating condition, which changed compared to the first setting, can be easily identified and documented. The same applies accordingly to the at least one second operating condition which remains unchanged. Assumed that the first setting completed a preceding commissioning or recommissioning process already successfully, the activities which become necessary during the recommissioning of the robot in the second setting, in particular with regard to safety, risk assessment and certification concerns, can be limited to these second operating conditions which effectively changed compared to the first operating conditions. So it is possible to facilitate and shorten the recommissioning process of the robot.

Preferably, the method can only be carried out in a recommissioning mode of the robot which can only be accessed by entering a password. Thus, the recommissioning process can only be initiated by authorized staff, for example a safety engineer or a field engineer. When restarting the robot after shutting it down during the recommissioning mode was activated, the robot will preferably restart in the recommissioning mode. To exit the recommissioning mode it is preferably required to complete the recommissioning process and to enter a confirmation of the authorized person. The identity of the authorized person can be proved by entering the password in a Graphical User Interface (GUI). To exit the uncompleted recommissioning process, also the password of the authorized person can be required. The present mode of the robot is preferably displayed in the GUI. The GUI can also enable a user to control or to program the robot.

The at least one first operating condition can comprise at least one first boundary condition of the first working environment, and the at least one second operating condition can comprise at least one second boundary condition of the second working environment. Thus, assessing the second setting can comprise the comparison of the at least one second boundary condition with the at least one first boundary condition. In case, the second working environment is assessed on the basis of several second boundary conditions having different physical quantities, the at least one second boundary condition is preferably compared to the corresponding at least one first boundary condition of the same physical quantity. Thus, the second setting can be assessed with regard to the boundary conditions given to the robot by the corresponding working environment.

The at least one first boundary condition and the at least one second boundary condition respectively can comprise
- a size of a workspace of the corresponding working environment,
- a position and/or velocity and/or acceleration of an object and/or a person located in the corresponding working environment,
- a radius of an edge located in the corresponding working environment,
   and/or
- a physical property, in particular a hardness and/or a friction coefficient, of a surface located in the corresponding working environment.

This list is not final and can comprise further boundary conditions.

For example, the second setting can be assessed by a comparison of a size of a second workspace of the second working environment with a size of a first workspace of the first working environment. In particular if it turns out that the size of the second workspace changed in comparison to the size of the first workspace, there may be an increased safety risk in the second setting compared to the first setting. This can apply if the size of the second workspace is bigger than the size of the first workspace as well as if the size of the second workspace is smaller than the size of the first workspace. In this case, this aspect has possibly to be re-evaluated and/or re-certified separately during the recommissioning process. Otherwise, if the size of the second workspace did not change in comparison to the size of the first workspace, the operation of the robot in the second setting will probably not pose a higher risk compared to the operation of the robot in the first setting.

With regard to the others of the mentioned boundary conditions this principle can apply accordingly. So may a person's and/or an object's position and/or velocity and/or acceleration which is in the second working environment different than in the first working environment indicate an increased safety risk, because this means that a motion sequence in the second setting probably differs from the corresponding motion in the first setting. An unchanged position and/or velocity and/or acceleration of an object or a person in the second environment can however indicate that no higher risk has to be expected. The position and/or velocity and/or acceleration of an object and/or a person is preferably considered in connection with a position and a trajectory of the robot.

A changed radius of an edge can also correspond to a higher risk. Especially a smaller radius of an edge can go along with a higher risk of injury. A comparison of physical properties of surfaces located in the first working environment and the second working environment can also be used to assess the second setting.

In a preferred embodiment of the invention, the at least one first operating condition comprises at least one first characteristic of the robot in the first setting, and the at least one second operating condition comprises at least one second characteristic of the robot in the second setting. According to the preceding explanations concerning the wording "working environment", the respective characteristic of the robot may comprise these factors which are related to the robot as such and which are preferably relevant with regard to the application of the robot. Thus, the second setting can be assessed based on the at least one second characteristic of the robot which possibly changed compared to the corresponding at least one first characteristic of the robot in the first setting.

The at least one first characteristic and the at least one second characteristic respectively can comprise
- a size of a component of the robot in the corresponding setting,
- a position and/or velocity and/or acceleration of a moving part of the robot in the corresponding setting,
- a force and/or torque and/or power provided by a drive unit of the robot in the corresponding setting,
- a control mode by which the force and/or torque and/or power provided by a drive unit of the robot in the corresponding setting is controlled,
- a physical property of the robot in the corresponding setting, in particular a hardness and/or a friction coefficient of a surface and/or a mechanical strength,
- the reducing of forces and/or velocity related to a quasi-static contact in the corresponding setting,
- an end effector in the corresponding setting,
- a force and/or torque and/or power exerted by an end effector in the corresponding setting,
- a control mode of an end effector in the corresponding setting,
   and/or
- a permitted working mode of the robot in the corresponding setting.

This list is not final and can comprise further characteristics of the robot.

So for example, the second setting can be assessed by comparing the size of the component of the robot in the second setting with the size of the corresponding component in the first setting. The component can be formed for instance by a robot arm. Possibly the robot arm of the first setting was replaced in the second setting to amend the characteristics of the robot with regard to the task of the robot in the second setting. If it turns out that the size of the component in the second setting differs from the size of the corresponding component in the first setting, there may be an increased safety risk in the second setting compared to the first setting. In this case, this aspect has possibly to be re-evaluated and/or re-certified separately during the recommissioning process. Otherwise, if the size of the component in the second setting did not change, the operation of the robot in the second setting will possibly not pose a higher risk compared to the operation of the robot in the first setting. This principle can apply in the same way to the other characteristics mentioned above. The at least one characteristic of the robot can not only be a physical property of the robot but also a configuration which is set by a control unit of the robot.

Regarding the force and/or torque and/or power provided by a drive unit of the robot it can be checked, if the force limit and the torque limit of a component, in particular the end effector, is below the pain threshold given in the technical standards like ISO/TS 15066.

Taking the reducing of forces related to a quasi-static contact in consideration when assessing the second setting can be important, because a quasi-static contact preferably means that the robot collides with a very low velocity with an object or a person. If the object or the person only provides a low resistance, the robot possibly does not detect the contact. Hence, the manner how the robot reduces its forces related to a quasi-static contact as well as the quantitative conditions which apply are preferably used for the assessment of the second setting. A quasi-static contact can occur when the operator does not have enough space to move around, for example due to fixed objects located in the working environment. The use of contact detectors or sensors like proximity sensors can contribute to lower the safety risk.

The control mode of the end effector can especially comprise an "autonomous mode" in which the end effector is exclusively controlled by the software of the control unit and without interaction with a human. Further, the control mode can comprise a so-called "GUI mode" in which the end effector can be exclusively controlled by a human through the GUI. The working mode of the robot can preferably comprise at least the two configurations "collaborative" and "non-collaborative". As mentioned above, the present mode of the robot is preferably displayed in the GUI.

In a further embodiment of the invention, the at least one first operating condition comprises at least one first working condition of an operator in the first setting, and the at least one second operating condition comprises at least one second working condition of the operator in a second setting. This can ensure that the at least one working condition of the operator do not worsen after recommissioning the robot. Additionally, the considering of the at least one working condition can provide the opportunity to improve the at least one working condition in the second setting compared to the first setting. In the context of the present invention a "working condition" is meant to be a condition which has not a direct impact on safety but can however be relevant for the operator's health, for example in form of back injury. By considering the at least one working condition, in particular ergonomic hazards to the operator shall be minimized.

The at least one working condition is preferably considered if the robot to recommission is a collaborative robot. In a setting with a collaborative robot there is often an opportunity to transfer these activities to the robot which pose a health hazard to the operator.

The determining of the at least one first working condition and the determining of the at least one second working condition respectively can comprise a check if one or more of the following situations is fulfilled, during the collaboration of the operator with the robot.
- The operator is utilizing his upper limb, in particular periodically and/or for a longer duration. For example, the operator uses his or her elbow in a position above the shoulder level all the time.
- The operator needs to exert force with the hands while bending to pick objects.
- The operator needs to use his fingertips to grab material, in particular for a longer duration.
- The operator needs to do a vertical movement of his or her body outside the range between his hips and shoulder, for example because his or her body posture is kept far from a workpiece.
- The operator has to use his neck and trunk posture in an unbalanced condition, for example because he or she needs to move his or her whole body.
- The operator has to use his trunk and neck in backward disposition or extension or harsh modulation.
- The operator has to do wrist alteration and/or knee bending, in particular for a longer duration.
- The operator has to bow or crouch.
- The operator has to use his head in a way which causes spinal curvature while sitting.
- The operator has to use elbow extension or uttermost forearm rotation.

The preceding mentioned situations or similar situations should be avoided in the second setting. Therefore, their absence can be a requirement to complete the recommissioning process and to exit the recommissioning mode.

In a preferred embodiment of the invention, the determining of at least one of the operating conditions comprises taking an image of at least a part of the corresponding setting. This can simplify the step of determining the at least one operating condition significantly. The at least one image can be taken with a camera which is located outside the robot. The camera can also be located on the robot. Preferably, several cameras are placed at different locations to be able to generate a basis for the assessment of the second setting which is as comprehensive as possible.

In one embodiment of the invention, the determining of one of the operating conditions comprises deriving this at least one operating condition from the image. Thus, the second setting can be assessed by comparing this at least one operating condition with the corresponding operating condition of the other setting. In further embodiment of the invention, at least one first image is taken of the first setting and at least one second image is taken of the second setting. In this case, the second setting can be also assessed by a comparison of the at least one first image and the at least one second image. The at least one second image can be taken in such a manner that it shows a second image section accordingly to a first image section of the at least one first image. In particular if the second image section of the at least one second image corresponds to the first image section of the at least one first image, the separate deriving of at least one of the operating conditions from the at least one taken image can possibly be omitted.

Preferably, the determining of at least one of the operating conditions and/or the comparison of the at least one second operating condition with the corresponding at least one first operating condition is carried out with the use of electronic processing of the taken image. This can further simplify the determining of the at least one operating condition and the assessing of the second setting significantly. In particular, the electronic processing can enable the robot to carry out the determining of the corresponding operating condition and the comparison of the at least one second operating condition with the corresponding at least one first operating condition by itself.

In a preferred embodiment of the invention, the determining of the at least one first operating condition, the determining of the at least one second operating condition and the assessing of the second setting is carried out on the basis of a first checklist and a second checklist, wherein the first checklist refers to the operator and the second checklist refers to the remaining second working environment. The first checklist can contain the at least one operating condition which can mean a risk from the operators view. The second checklist can contain the at least one operating condition which can mean a risk for the remaining second working environment. So the recommissioning process can be easily adapted to different working modes of the robot. The first checklist and the second checklist are preferably filled in during the determining of the at least one first operating condition and the determining of the at least one second operating condition. The assessing of the second setting can be carried out based on the information about the at least one first operating condition and the at least one second operating condition contained in the filled first and second checklists. The first checklist and the second checklist can be generated by the authorized person. Based on the principle of two checklists it is also possible to assign the same of the at least one operating condition to different checklists and weight them differently. If the robot will for instance only work in a non-collaborative mode after the recommissioning, the at least one operating condition which is in particular related to the safety of an co-working operator can weighted lower than in case a collaborative working mode is intended. Following this principle, it is also possible to decide based on the outcome of the assessing of the second setting, if the application of the robot in the collaborative mode is possible in the second setting.

In one embodiment of the invention, the first checklist comprises the following of the characteristics of the robot:
- a position and/or velocity and/or acceleration of a moving part of the robot in the corresponding setting,
- a force and/or torque and/or power provided by a drive unit of the robot in the corresponding setting,
- a mechanical strength of the robot in the corresponding setting,
- the reducing of forces and/or velocity related to a quasi-static contact in the corresponding setting,
- a force and/or torque and/or power exerted by an end effector in the corresponding setting,
   and/or
- a control mode of an end effector in the corresponding setting.

In this embodiment the first checklist can further comprise the following of the working conditions:
- The operator is utilizing his upper limb, in particular periodically and/or for a longer duration. For example, the operator uses his or her elbow in a position above the shoulder level all the time.
- The operator needs to exert force with the hands while bending to pick objects.
- The operator needs to use his fingertips to grab material, in particular for a longer duration.
- The operator needs to do a vertical movement of his or her body outside the range between his hips and shoulder, for example because his or her body posture is kept far from a workpiece.
- The operator has to use his neck and trunk posture in an unbalanced condition, for example because he or she needs to move his or her whole body.
- The operator has to use his trunk and neck in backward disposition or extension or harsh modulation.
- The operator has to do wrist alteration and/or knee bending, in particular for a longer duration.
- The operator has to bow or crouch.

The second checklist in this embodiment can comprise the characteristic of the robot that the forces and/or the velocity related to a quasi-static contact in the corresponding setting is reduced.

The second checklist in this embodiment can further comprise the following of the boundary conditions:
- a position and/or velocity and/or acceleration of an object and/or a person located in the corresponding working environment,
- a radius of an edge located in the corresponding working environment,
   and/or
- a physical property, in particular a hardness and/or a friction coefficient, of a surface located in the corresponding working environment.

Additionally, the second checklist in this embodiment can comprise the following of the working conditions:
- The operator is utilizing his upper limb, in particular periodically and/or for a longer duration. For example, the operator uses his or her elbow in a position above the shoulder level all the time.
- The operator needs to use his fingertips to grab material, in particular for a longer duration.
- The operator needs to do a vertical movement of his or her body outside the range between his hips and shoulder, for example because his or her body posture is kept far from a workpiece.
- The operator has to use his neck and trunk posture in an unbalanced condition, for example because he or she needs to move his or her whole body.
- The operator has to use his trunk and neck in backward disposition or extension or harsh modulation.
- The operator has to do wrist alteration and/or knee bending, in particular for a longer duration.
- The operator has to bow or crouch.
- The operator has to use his head in a way which causes spinal curvature while sitting.
- The operator has to use elbow extension or uttermost forearm rotation.

In an embodiment of the invention, the method is at least partly executed by the robot itself. So the recommissioning process can be facilitated. Additionally, this leads to a recommissioning process which is more standardized and reproducible than conventional recommissioning processes. In particular, if the recommissioning process is conducted by only little experienced staff, the sources of error can be reduced. In particular for the determining of the at least one operating condition in the first setting and the second setting, the robot can have a special recommissioning end effector which is equipped to be able to determine the at least one operating condition. For example, the recommissioning end effector can comprise devices like a distance measuring device or a camera. Preferably, the method is completely executed by the robot itself.

In a preferred embodiment of the invention, at least one of the steps is carried out with the use of artificial intelligence. In particular, the determining of at least one of the operating conditions and/or the comparison of the at least one second operating condition with the corresponding at least one first operating condition can be supported or conducted completely by the artificial intelligence. Within this process, the artificial intelligence is preferably used for analyzing the at least one image. With the use of artificial intelligence it can thus be possible to conduct important parts of the recommissioning process without the support of a human, for example, the identification of obstacles, robot components, and/or a robot pose, as well as a rating if collaborative mode possible and/or the overall assessment of the second setting.

In an embodiment of the invention, a report is generated containing an assessment of the second setting. Based on this assessment, it can be quickly identified if there is a critical second operating condition with regard to the recommissioning. Such a critical second operating condition may be one of the at least one second operating conditions which changed compared to the first setting and which is possibly objected as not meeting the safety requirements. The amendment of such a critical operating condition can be a requirement to complete the recommissioning process. Preferably, the report contains additionally a recommendation on how to change the second setting to lower the safety risk and to be in accordance with the safety requirements. The report can also contain the determined at least one first operating condition and the determined at least one second operating condition. Preferably, the report is generated after assessing the second setting.

In a further embodiment of the invention the method is at least partly executed by an operator. In this case, the operator preferably conducts the determining of the at least one first operating condition, the determining of the at least one second operating condition and the assessing of the second setting based on the first checklist and the second checklist. So the recommissioning process can be simplified in a way that it can be largely conducted by an operator. In particular, the first checklist and the second checklist can be configured to be filled out by the operator. On the basis of the filled out checklists the report can be generated by the operator pressing a corresponding "report generation tab". At least one of the checklists and the report can also contain the at least one image of the first setting or the second setting.

The report has in particular the function to inform the authorized person about the execution of the recommissioning process and its results, regardless of who conducted the process: the operator or the robot, in particular with the help of artificial intelligence, or both of them partly. The authorized person has preferably the responsibility to double-check the report before confirming the successful completion of the recommissioning process and exiting the recommissioning mode. Thus, a supervisory authority in form of a four-eye-principle can be realized in the recommissioning process, which is very important in particular with regard to safety concerns. If the operator who conducts the recommissioning process is supported by the robot using artificial intelligence and the position of the authorized person is filled with both, a safety engineer and a field engineer, the supervisory authority can be extended to a "quasi-eight-eye-principle". Preferably, the authorized person has also the responsibility to take further steps, if he or she comes to the result that the recommissioning process was not completed successfully.

A robot according to the invention is configured to conduct at least a part of the method described above.

Preferably, the robot is configured for human-robot collaboration. From experience it is known that for such collaborative robots a recommissioning can be particularly useful. Additionally, the robot can be a light-weighted robot.

Further benefits and advantages of the present invention will become apparent after a careful reading of the following description with appropriate reference to the accompanying drawings.

The drawings show in
- figure 1: a flowchart of a method according to a first embodiment of a method for recommissioning a robot,
- figure 2a: a schematic view of a first setting, corresponding to the method shown in figure 1,
- figure 2b: a schematic view of a second setting, corresponding to the method shown in figure 1,
- figure 3: a flowchart of a method according to a second embodiment of a method for recommissioning a robot,
- figure 4a: a schematic view of a first setting, corresponding to the method shown in figure 3,
- figure 4b: a schematic view of a second setting, corresponding to the method shown in figure 3.

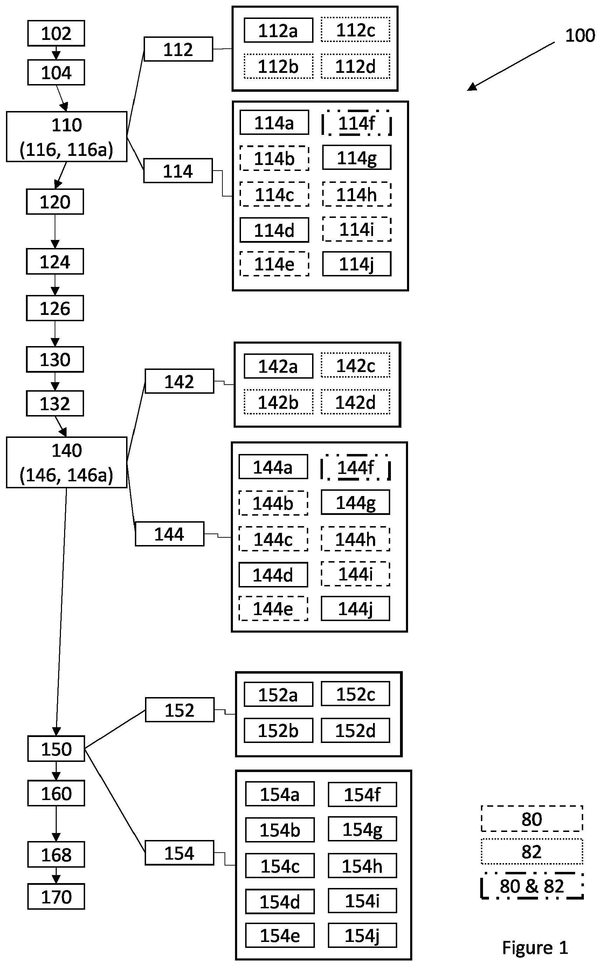

The figures 1 to 4b relate to different embodiments. For identical and functionally identical parts the same reference numbers are used. For clarity, not all reference numbers are used in each figure.

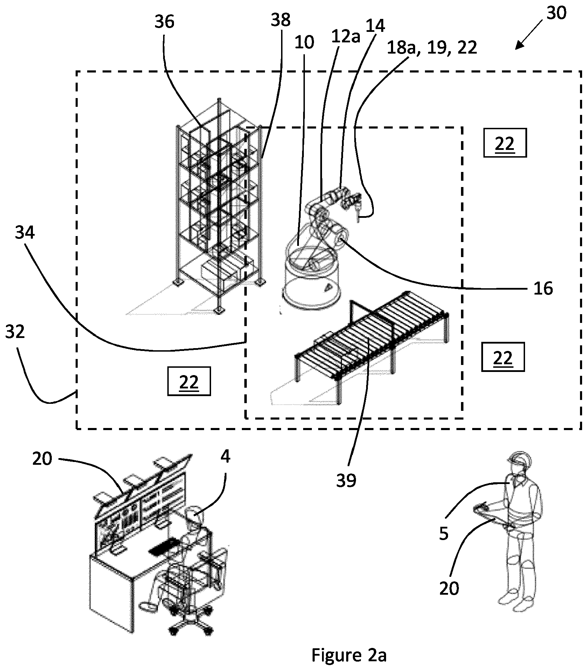

Figure 1 shows a flowchart of a method 100 for recommissioning a robot 10. Originally, the robot 10 is used in a first setting 30, comprising the robot 10 and a first working environment 32 of the robot 10 (see figure 2a). In a step 110, at least one first operating condition in the first setting 30 is determined.

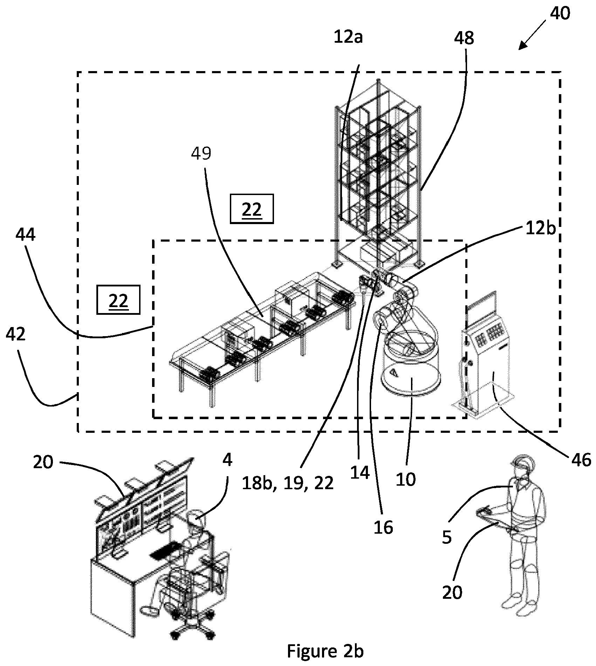

After taking out the robot 10 of the first working environment 32 in a step 120, the robot 10 is placed in a second working environment 42 of a second setting 40 (see figure 2b) in a step 130. Then, in step 140, at least one second operating condition in the second setting 40, which comprises the robot 10 and the second working environment 42, is determined. In a following step 150, the second setting 40 is assessed by conducting a comparison of the at least one second operating condition with the corresponding at least one first operating condition.

As can be explained with the help in particular of figures 2a and 2b, the first setting 30 and the second setting 40 respectively comprise the robot 10 and the corresponding first working environment 32 or second working environment 42. Preferably, the first working environment 32 and the second working environment 42 respectively comprise the corresponding setting 30, 40 without the robot 10. In particular, the respective working environment 32, 42 may comprise all factors which are relevant with regard to the robot 10 and its application but are not related to the robot 10 as such.

Between the steps 120 of taking the robot 10 out of the first working environment 32 and the step 130 of placing it in the second working environment 42, the robot 10 is preferably shut down in the first working environment 32 (step 124) and moved in from the first working environment 32 to the second working environment 42 (step 126). After placing it in the second working environment 42 in step 130, the robot 10 is restarted (step 132).

Preferably, the steps 108 to 160 can only be carried out in a recommissioning mode of the robot 10 which can only be accessed with a password. Therefore, before the determining of the at least one operating condition in step 110, preferably the recommissioning mode has to be started in a step 102 and the password has to be entered in a following step 104. Thus, the recommissioning process can only be initiated by authorized staff, for example a safety engineer 4 or a field engineer 5. When restarting the robot 10 in step 132 after shutting it down (step 124) during the recommissioning mode was activated, the robot 10 will preferably restart in the recommissioning mode. To exit the recommissioning mode in a step 170 it is preferably required that the safety engineer 4 or the field engineer 5 confirm the completion of the recommissioning process by entering the password in a foregoing step 168. The password can be entered in a GUI 20.

The determining of the at least one first operating condition (step 110) can comprise the determining of at least one first boundary condition of the first working environment 32 in a step 112, and the determining of at least one second operating condition (step 140) can comprise the determining of at least one second boundary condition of the second working environment 42 in step 142.

The determining of the first boundary conditions (step 112) can comprise the determining of
- a size of a first workspace 34 of the first working environment 32 (step 112a),
- a position and/or velocity and/or acceleration of first object 36 located in the first working environment 32 (step 112b),
- a radius of a first edge 38 located in the first working environment 32 (step 112c),
   and/or
- a physical property of a first surface 39 located in the first working environment 32 (step 112d).

Accordingly, the determining of the second boundary conditions (step 142) can comprise the determining of
- a size of a second workspace 44 of the second working environment 42 (step 142a),
- a position and/or velocity and/or acceleration of second object 46 located in the second working environment 42 (step 142b),
- a radius of a second edge 48 located in the second working environment 42 (step 142c),
   and/or
- a physical property of a second surface 49 located in the second working environment 42 (step 142d).

Thus, the second setting 40 can be assessed by a comparison of at least one of the second boundary conditions with the corresponding at least one first boundary condition in a step 152, comprising the comparison of
- the size of the second workspace 44 with the size of the first workspace 34 (step 152a),
- the position and/or velocity and/or acceleration of the second object 46 with the position and/or velocity and/or acceleration of the first object 36 (step 152b),
- the radius of the second edge 48 with the radius of the second edge 38 (step 152c),
   and/or
- the physical property of the second surface 49 with the physical property of the first surface 39 (step 152d) .

Further, the determining of at least one first operating condition (step 110) can comprise the determining of at least one first characteristic of the robot 10 in the first setting 30 in a step 114. Accordingly, the determining of the at least one second operating condition (step 140) can comprise the determining of at least one second characteristic of the robot 10 in the second setting 40 in a step 144. According to the preceding explanations concerning the wording "working environment", the respective characteristic of the robot 10 may comprise these factors which are related to the robot 10 as such and which are preferably relevant with regard to the application of the robot 10.

The determining of the at least one first characteristic (step 114) can comprise the determining of
- a size of a first component 12a of the robot 10 in the first setting 30 (step 114a),
- a position and/or velocity and/or acceleration of a moving part 14 of the robot 10 in the first setting 30 (step 114b),
- a force and/or torque and/or power provided by a drive unit 16 of the robot 10 in the first setting 30 (step 114c),
- a control mode by which the force and/or torque and/or power provided by the drive unit 16 of the robot 10 in the first setting 30 is controlled (step 114d),
- a physical property of the robot 10 in the first setting 30, in particular a hardness and/or a friction coefficient of a surface and/or a mechanical strength (step 114e),
- the reducing of forces and/or velocity related to a quasi-static contact in the first setting 30 (step 114f),
- a first end effector 18a in the first setting 30 (step 114g),
- a force and/or torque and/or power exerted by the first end effector 18a in the first setting 30 (step 114h),
- a control mode of the first end effector 18a in the first setting 30 (step 114i),
   and/or
- a permitted working mode of the robot 10 in the first setting 30 (step 114j).

Accordingly, the determining of the at least one second characteristic (step 144) can comprise the determining of
- a size of a second component 12b of the robot 10 in the second setting 40 (step 144a),
- a position and/or velocity and/or acceleration of the moving part 14 of the robot 10 in the second setting 40 (step 144b),
- a force and/or torque and/or power provided by the drive unit 16 of the robot 10 in the second setting 40 (step 144c),
- a control mode by which the force and/or torque and/or power provided by the drive unit 16 of the robot 10 in the second setting 40 is controlled (step 144d),

- a physical property of the robot 10 in the second setting 40, in particular a hardness and/or a friction coefficient of a surface and/or a mechanical strength (step 144e),
- the reducing of forces and/or velocity related to a quasi-static contact in the second setting 40 (step 144f),
- a second end effector 18b in the second setting 40 (step 144g),
- a force and/or torque and/or power exerted by the second end effector 18b in the second setting 40 (step 144h),
- a control mode of the second end effector 18b in the second setting 40 (step 144i),
   and/or
- a permitted working mode of the robot 10 in the second setting 40 (step 144j).

Thus, the second setting 40 can be assessed by a comparison of at least one of the second characteristics with the corresponding at least one first characteristic in a step 154, comprising the comparison of
- the size of a second component 12b of the robot 10 with the corresponding first component 12a (step 154a),
- the position and/or velocity and/or acceleration of the moving part 14 in the second setting 40 with the position and/or velocity and/or acceleration of the moving part 14 in the first setting 30 (step 154b),
- the force and/or torque and/or power provided by the drive unit 16 in the second setting 40 with the force and/or torque and/or power provided by the drive unit 16 in the first setting 30 (step 154c),
- the control mode by which the force and/or torque and/or power provided by the drive unit 16 in the second setting 40 is controlled with the corresponding control mode in the first setting 30 (step 154d),
- the physical property of the robot 10 in the second setting 40 with the physical property of the robot 10 in the first setting 30 (step 154e),
- the reducing of forces and/or velocity related to a quasi-static contact in the second setting 40 with the reducing of forces and/or velocity related to a quasi-static contact in the first setting 30 (step 154f),
- the second end effector 18b with the first end effector 18a (step 154g),
- the force and/or torque and/or power exerted by the second end effector 18b with the force and/or torque and/or power exerted by the first end effector 18a (step 154h),
- the control mode of the second end effector 18b with the control mode of the first end effector 18a (step 154i),
   and/or
- the permitted working mode in the second setting 40 with the permitted working mode in the first setting 30 (step 154j).

The determining of at least one of the operating conditions (steps 110, 140) can comprise taking an image of at least a part of the corresponding setting 30, 40 in a step 116, 146. The at least one image can be taken with a camera 22 which is located outside the robot 10. At least one camera 22 can also be located on the robot 10.

The operating condition of the first setting 30 or the second setting 40 can be derived from the image in steps 116a, 146a. Thus, the second setting 40 can be assessed in step 150 by comparing the operating condition derived from the image with the corresponding operating condition of the other setting. If at least one first image is taken of the first setting 30 and a corresponding at least one second image is taken of the second setting 40, the second setting can be also assessed by a comparison of the at least one first image and the at least one second image. In this case, the separate deriving of at least one of the operating conditions from the at least one taken image (steps 116a, 146a) can possibly be omitted.

Preferably, the determining of at least one of the operating conditions (steps 110, 140) and/or the comparison of the at least one second operating condition with the corresponding at least one first operating condition (within step 150) is carried out with the use of electronic processing of the taken image.

The method can be at least partly executed by the robot 10 itself. Preferably, the determining of the at least one first operating condition (step 110), the determining of the at least one second operating condition (step 140) and/or the assessing of the second setting 40 (step 150) are at least partly executed by the robot 10. In particular for the determining of the at least one operating condition in the first setting 30 (step 110) and the determining of the at least one operating condition in the second setting 40 (step 140), the robot 10 can have a special recommissioning end effector 19 which is equipped to be able to determine the at least one operating condition. The recommissioning end effector 19 can comprise devices like a distance measuring device or the camera 22.

Preferably, at least one of the steps 110 to 150 is carried out with the use of artificial intelligence. In particular, the determining of at least one of the operating conditions (steps 110, 140) and/or the comparison of the at least one second operating condition with the corresponding at least one first operating condition (step 150) can be supported or conducted completely by the artificial intelligence. Within this process, the artificial intelligence is preferably used for analyzing the at least one image.

After assessing the second setting 40 (step 150), in a step 160 a report can be generated containing an assessment of the second setting. Based on this assessment, it can be quickly identified if there is a critical second operating condition with regard to the recommissioning. The amendment of such a critical operating condition can be a requirement to complete the recommissioning process and thus to exit the recommissioning mode in step 170. Preferably, the report contains additionally a recommendation on how to change the second setting 40 to lower the safety risk and to be in accordance with the safety requirements. The report can also contain the determined at least one first operating condition and the determined at least one second operating condition. Preferably, the report is provided on the GUI 20.

The report has in particular the function to inform the authorized person, namely the safety engineer 4 and/or the field engineer 5, about the execution of the recommissioning process, its results and by whom the recommissioning process was conducted. The authorized person 4, 5 has preferably the responsibility to double-check the report before confirming the successful completion of the recommissioning process and exiting the recommissioning mode (step 170) by entering the password (step 168). Thus, a supervisory authority in form of a four-eye-principle can be realized in the recommissioning process, which is very important in particular with regard to safety concerns. Preferably, the authorized person has also the responsibility to take further steps, if he or she comes to the result that the recommissioning process was not completed successfully.

The robot 10 is configured to conduct at least a part of the method described above.

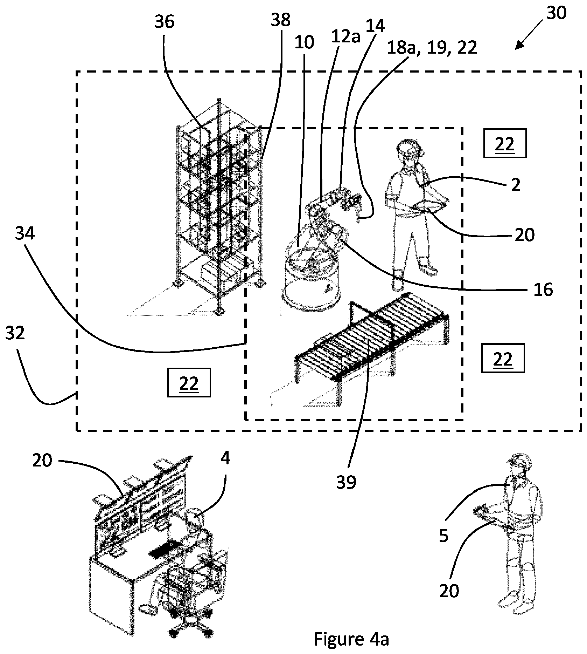

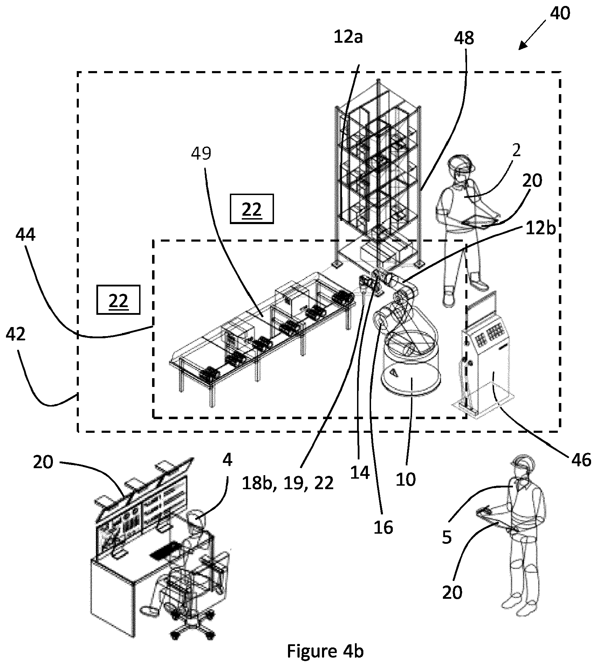

Preferably, the robot 10 is a light-weighted robot configured for human-robot collaboration. In this case, the method is preferably used in a second embodiment which is shown in fig- ure 3 and will be also explained with the help of figures 4a and 4b. Basically, the second embodiment of the method corresponds to the first embodiment. Therefore, in the following particularly the differences of the second embodiment over the first embodiment will be discussed.

In the second embodiment, the determining of the at least one first operating condition (step 110) comprises the determining of at least one first working condition of an operator 2 in the first setting 30 in a step 118, and the determining of the at least one second operating condition (step 140) comprises the determining of at least one second working condition of the operator 2 in the second setting 40 in a step 148.

The determining of the at least one first working condition (step 118) and the determining of the at least one second working condition (step 148) respectively can comprise a check if one or more of the following situations is fulfilled in the first setting 30 during the collaboration of the operator 2 with the robot 10:
- The operator 2 is utilizing his upper limb, in particular periodically and/or for a longer duration (steps 118a, 148a).
- The operator 2 needs to exert force with the hands while bending to pick objects (steps 118b, 148b).
- The operator 2 needs to use his fingertips to grab material (steps 118c, 148c).
- The operator 2 needs to do a vertical movement of his or her body outside the range between his hips and shoulder (steps 118d, 148d).
- The operator 2 has to use his neck and trunk posture in an unbalanced condition (steps 118e, 148e).
- The operator 2 has to use his trunk and neck in backward disposition or extension or harsh modulation (steps 118f, 148f) .
- The operator 2 has to do wrist alteration and/or knee bending (steps 118g, 148g).
- The operator 2 has to bow or crouch (steps 118h, 148h).
- The operator 2 has to use his head in a way which causes spinal curvature while sitting (steps 118i, 148i).
- The operator 2 has to use elbow extension or uttermost forearm rotation (steps 118j, 148j).

The preceding mentioned situations or similar situations should be avoided in the second setting 40. Therefore, their absence can be a requirement to complete the recommissioning process and to exit the recommissioning mode (step 170).

Thus, the second setting 40 can be assessed by a comparison of at least one of the second working conditions with the corresponding at least one first working condition in a step 158, comprising the comparison if
- the operator 2 is utilizing his upper limb, in particular periodically and/or for a longer duration (step 158a),
- the operator 2 needs to exert force with the hands while bending to pick objects (step 158b),
- the operator 2 needs to use his fingertips to grab material (step 158c),
- the operator 2 needs to do a vertical movement of his or her body outside the range between his hips and shoulder (step 158d),
- the operator 2 has to use his neck and trunk posture in an unbalanced condition (step 158e),
- the operator 2 has to use his trunk and neck in backward disposition or extension or harsh modulation (step 158f),
- the operator 2 has to do wrist alteration and/or knee bending (step 158g),
- the operator 2 has to bow or crouch (step 158h),
- the operator 2 has to use his head in a way which causes spinal curvature while sitting (step 158i),
   and/or
- the operator 2 has to use elbow extension or uttermost forearm rotation (step 158j).

In the second embodiment, the determining of the at least one first operating condition (step 110), the determining of the at least one second operating condition (step 140) and the assessing of the second setting (step 150) can be carried out on the basis of a first checklist 80 and a second checklist 82, wherein the first checklist 80 refers to the operator 2 and the second checklist 82 refers to the remaining second working environment 42. The first checklist 80 can contain the at least one operating condition which can mean a risk from the operators view. The second checklist 82 can contain the at least one operating condition which can mean a risk for the remaining second working environment 42. The first checklist 80 and the second checklist 82 are preferably filled in during the determining of the at least one first operating condition (step 110) and the determining of the at least one second operating condition (step 140) in concomitant steps 180, 182. The assessing of the second setting (step 150) can be carried out based on the information about the at least one first operating condition and the at least one second operating condition contained in the filled first checklist 80 and the filled second checklist 82.

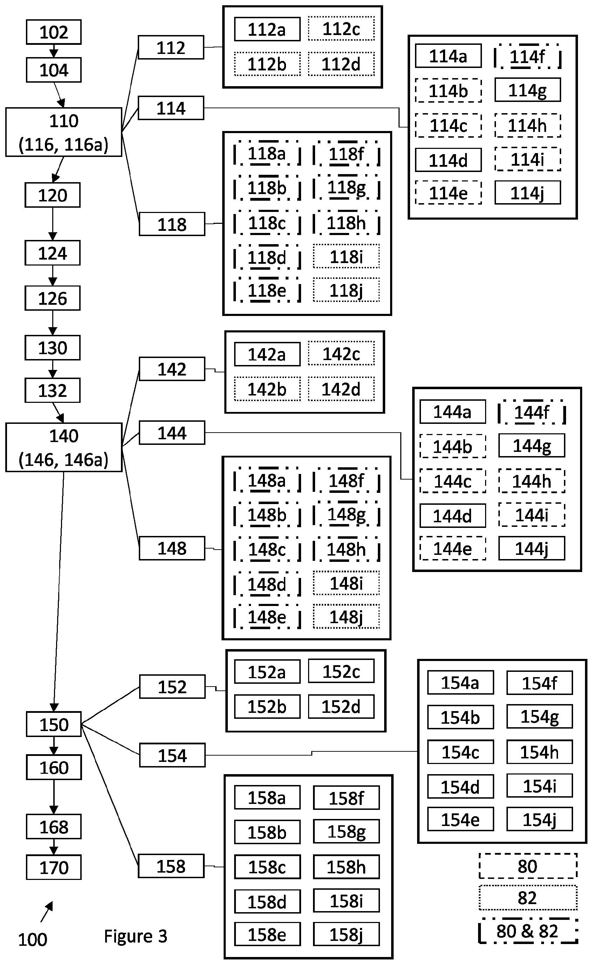

The preferred content of each checklist is marked in figure 3: steps preferably only contained in the first checklist 80 are outlined with dashed lines, steps preferably only contained in the second checklist 82 are outlined with dotted lines and steps preferably contained in both, the first checklist 80 and the second checklist 82 are outlined with dash-dot lines.

The first checklist 80 is preferably generated by the authorized person, namely the safety engineer 4 and/or the field engineer 5, before the determining of the at least one first operating condition (step 110) in a step 118. The second checklist 82 is preferably generated by the authorized person, namely the safety engineer 4 and/or the field engineer 5, before the determining of the at least one second operating condition (step 140) in a step 138.

Preferably, with the help of the first checklist 80 the following of the characteristics of the robot are determined:
- the position and/or velocity and/or acceleration of a moving part of the robot 10 in the first setting 30 (steps 114b), respectively the second setting 40 (step 144b),
- the force and/or torque and/or power provided by a drive unit of the robot 10 in the first setting 30 (step 114c), respectively the second setting 40 (step 144c),
- the mechanical strength of the robot 10 in the first setting 30 (step 114e), respectively in the second setting 40 (step 144e),
- the reducing of forces and/or velocity related to a quasi-static contact in the first setting 30 (step 114f), respectively the second setting 40 (step 144f),
- the force and/or torque and/or power exerted by the first end effector 18a in the first setting 30 (step 114h), respectively by the second end effector 18b in the second setting 40 (step 114h),
   and/or
- the control mode of the first end effector 18a in the first setting 30 (step 114i), respectively the control mode of the second end effector 18b in the second setting 40 (step 144i).

The first checklist 80 can further comprise several of the working conditions of the corresponding setting 30, 40. Preferably, with the help of the first checklist 80 it is determined if
- the operator 2 is utilizing his upper limb, in particular periodically and/or for a longer duration (steps 118a, 148b),
- the operator 2 needs to exert force with the hands while bending to pick objects (steps 118b, 148b),
- the operator 2 needs to use his fingertips to grab material, in particular for a longer duration (steps 118c, 148c),
- the operator 2 needs to do a vertical movement of his or her body outside the range between his hips and shoulder (steps 118d, 148d),
- the operator 2 has to use his neck and trunk posture in an unbalanced condition (steps 118e, 148e),
- the operator 2 has to use his trunk and neck in backward disposition or extension or harsh modulation (steps 118f, 148f),
- the operator 2 has to do wrist alteration and/or knee bending (steps 118g, 148g),
- the operator 2 has to bow or crouch (steps 118h, 148h).

As further shown in figure 3, the characteristic of the robot 10 in what extent the forces and/or the velocity related to a quasi-static contact in the corresponding setting 30, 40 are reduced is determined with the help of the second checklist 82 (step 114f, 144f).

With the help of the second checklist 82, further the following of the boundary conditions can be determined:
- the position and/or velocity and/or acceleration of the first object 36 and/or a person, in particular the operator 2, located in the first working environment 32 (step 112b), respectively of the second object 46 and/or a person, in particular the operator 2, located in the second working environment 42 (step 142b),
- the radius of the first edge 38 (step 112c), respectively the radius of the second edge 48 (step 142 c),
   and/or
- a physical property, of the first surface 39 (step 112d), respectively the second surface 49 (step 142d).

Additionally, the second checklist 82 can comprise several of the working conditions of the corresponding setting 30, 40. Preferably, with the help of the second checklist 82 it is determined if
- the operator 2 is utilizing his upper limb, in particular periodically and/or for a longer duration (steps 118a, 148b),
- the operator 2 needs to use his fingertips to grab material, in particular for a longer duration (steps 118c, 148c),
- the operator 2 needs to do a vertical movement of his or her body outside the range between his hips and shoulder (steps 118d, 148d),
- the operator 2 has to use his neck and trunk posture in an unbalanced condition (steps 118e, 148e),
- the operator 2 has to use his trunk and neck in backward disposition or extension or harsh modulation (steps 118f, 148f),
- the operator 2 has to do wrist alteration and/or knee bending (steps 118g, 148g),
- the operator 2 has to bow or crouch (steps 118h, 148h),
- the operator 2 has to use his head in a way which causes spinal curvature while sitting (steps 118i, 148i),
- the operator 2 has to use elbow extension or uttermost forearm rotation (steps 118j, 148j).

In the second embodiment shown in figures 3, 4a and 4b, the method can be at least partly executed by the operator 2. The operator 2 can conduct the determining of the at least one first operating condition (step 110), the determining of the at least one second operating condition (140) and the assessing of the second setting (step 150) based on the first checklist 80 and the second checklist 82. So the recommissioning process can be simplified in a way that it can be largely conducted by the operator 2. The first checklist 80 and the second checklist 82 are preferably configured to be filled in by the operator. On the basis of the filled out checklists 80, 82, the report can be generated (step 160) by the operator 2 pressing a corresponding "report generation tab" on the GUI 20. At least one of the checklists 80, 82 and the report can also contain the at least one image of the first setting 30 or the second setting 40.

If the operator 2 who conducts the recommissioning process is supported by the robot 10 using artificial intelligence and the position of the authorized person is filled with both, the safety engineer 4 and the field engineer 5, the supervisory authority can be extended to a "quasi-eight-eye-principle".

Reference list
- 2: operator
- 4: safety engineer
- 5: field engineer
- 10: robot
- 12a: first component
- 12b: second component
- 14: moving part
- 16: drive unit
- 18a: first end effector
- 18b: second end effector
- 19: recommissioning end effector
- 20: Graphical User Interface (GUI)
- 22: camera
- 30: first setting
- 32: first working environment
- 34: first workspace
- 36: first object
- 38: first edge
- 39: first surface
- 40: second setting
- 42: second working environment
- 44: second workspace
- 46: second object
- 48: second edge
- 49: second surface

- 80: first checklist
- 82: second checklist

- 100: method
- 102: starting recommissioning mode
- 104: entering password
- 108: generating of first checklist

- 110: determining of first operating condition

- 112: determining of first boundary condition
- 112a: determining of size of first workspace
- 112b: position and/or velocity and/or acceleration of first object
- 112c: determining of radius of first edge
- 112d: determining of physical property of first surface

- 114: determining of first characteristic
- 114a: determining of size of first component
- 114b: determining of position and/or velocity and/or acceleration of moving part of the robot
- 114c: determining of force and/or torque and/or power provided by drive unit
- 114d: determining of control mode
- 114e: determining of physical property of the robot
- 114f: determining of reducing of forces and/or velocity related to quasi-static contact
- 114g: determining of first end effector
- 114h: determining of force and/or torque and/or power exerted by first end effector
- 114i: determining of control mode of first end effector
- 114j: determining of permitted working mode

- 116: taking image of the first setting
- 116a: deriving operating condition from image of first setting

- 118: determining of first working condition
- 118a, 148a: determining if utilizing his upper limb
- 118b, 148b: determining if exerting force with the hands while bending
- 118c, 148c: determining if using fingertips to grab material
- 118d, 148d: determining if vertical movement of body outside range between hips and shoulder
- 118e, 148e: determining if neck and trunk posture in an unbalanced condition
- 118f, 148f: determining if trunk and neck in backward disposition or extension or harsh modulation
- 118g, 148g: determining if wrist alteration and/or knee bending
- 118h, 148h: determining if bowing or crouching
- 118i, 148i: determining if using head so that causes spinal curvature while sitting
- 118j, 148j: determining if using elbow extension or uttermost forearm rotation

- 120: taking the robot out of first working environment
- 124: shutting down robot
- 126: moving robot from first to second working environment
- 130: placing robot in second working environment
- 132: restarting robot
- 138: generating of second checklist

- 140: determining second operating condition
- 142: determining of second boundary condition
- 142a: determining of size of second workspace
- 142b: position and/or velocity and/or acceleration of second object
- 142c: determining of radius of second edge
- 142d: determining of physical property of second surface

- 144: determining of second characteristic
- 144a: determining of size of second component
- 144b: determining of position and/or velocity and/or acceleration of moving part of robot
- 144c: determining of force and/or torque and/or power provided by drive unit
- 144d: determining of control mode
- 144e: determining of physical property of the robot
- 144f: determining of reducing of forces and/or velocity related to quasi-static contact
- 144g: determining of second end effector
- 144h: determining of force and/or torque and/or power exerted by second end effector
- 144i: determining of control mode of second end effector
- 144j: determining of permitted working mode

- 146: taking image of the second setting
- 146a: deriving operating condition from image of second setting
- 148: determining of second working condition

- 150: assessing second setting
- 152: comparison of boundary conditions
- 152a: comparison of size of workspace
- 152b: comparison of position and/or velocity and/or acceleration of object
- 152c: comparison of radius of edge
- 152d: comparison of physical property of surface

- 154: comparison of characteristics
- 154a: comparison of size of components
- 154b: comparison of position and/or velocity and/or acceleration of moving part
- 154c: comparison of force and/or torque and/or power provided by the drive unit
- 154d: comparison of control mode of drive unit
- 154e: comparison of physical property of robot
- 154f: comparison of reducing of forces and/or velocity related to a quasi-static contact
- 154g: comparison of end effector
- 154h: comparison of force and/or torque and/or power exerted by end effector
- 154i: comparison of the control mode of end effector
- 154j: comparison of permitted working mode

- 158: comparison of working conditions
- 158a: comparison of utilizing his upper limb
- 158b: comparison of exerting force with the hands while bending
- 158c: comparison of using fingertips to grab material
- 158d: comparison of vertical movement of body outside range between hips and shoulder
- 158e: comparison of neck and trunk posture in an unbalanced condition
- 158f: comparison of trunk and neck in backward disposition or extension or harsh modulation
- 158g: comparison of wrist alteration and/or knee bending
- 158h: comparison of bowing or crouching
- 158i: comparison of using head so that causes spinal curvature while sitting
- 158j: comparison of using elbow extension or uttermost forearm rotation

- 160: generation of report
- 168: entering password
- 170: exiting recommissioning mode
- 180: filling of first checklist
- 182: filling of second checklist

## Claims

1. A method (100) for recommissioning a robot (10), comprising the following steps:
• determining at least one first operating condition in a first setting (30), comprising the robot (10) and a first working environment (32) of the robot (10),
• taking the robot (10) out of the first working environment (32),
• placing the robot (10) in a second working environment (42),
• determining at least one second operating condition in a second setting (40), comprising the robot (10) and the second working environment (42),
• assessing the second setting (40), conducting a comparison of the at least one second operating condition with the corresponding at least one first operating condition.

2. A method in accordance with claim 1,
**characterized in that**
the method (100) can only be carried out in a recommissioning mode of the robot (10) which can only be accessed by entering a password.

3. A method in accordance with any of the preceding claims,
**characterized in that**
the at least one first operating condition comprises at least one first boundary condition of the first working environment (32), and the at least one second operating condition comprises at least one second boundary condition of the second working environment (42).

4. A method in accordance with claim 3,
**characterized in that**
the at least one first boundary condition and the at least one second boundary condition respectively comprise
• a size of a workspace (34, 44) of the corresponding working environment (32, 42),
• a position and/or velocity and/or acceleration of an object (36, 46) and/or a person located in the corresponding working environment (32, 42),
• a radius of an edge (38, 48) located in the corresponding working environment (32, 42),
and/or
• a physical property, in particular a hardness and/or a friction coefficient, of a surface (39, 49) located in the corresponding working environment (32, 42) .

5. A method in accordance with any of the preceding claims,
**characterized in that**
the at least one first operating condition comprises at least one first characteristic of the robot (10) in the first setting (30), and the at least one second operating condition comprises at least one second characteristic of the robot (10) in the second setting (40).

6. A method in accordance with claim 5,
**characterized in that**
the at least one first characteristic and the at least one second characteristic respectively comprise
• a size of a component (12a, 12b) of the robot (10) in the corresponding setting (32, 42),
• a position and/or velocity and/or acceleration of a moving part (14) of the robot (10) in the corresponding setting (32, 42),
• a force and/or torque and/or power provided by a drive unit (16) of the robot (10) in the corresponding setting (32, 42),
• a control mode by which the force and/or torque and/or power provided by a drive unit (16) of the robot (10) in the corresponding setting (32, 42) is controlled,
• a physical property of the robot (10) in the corresponding setting (32, 42), in particular a hardness and/or a friction coefficient of a surface and/or a mechanical strength,
• the reducing of forces and/or velocity related to a quasi-static contact in the corresponding setting (32, 42),
• an end effector (18a, 18b) in the corresponding setting (32, 42),
• a force and/or torque and/or power exerted by an end effector (18a, 18b) in the corresponding setting (32, 42),
• a control mode of an end effector (18a, 18b) in the corresponding setting (32, 42),
and/or
• a permitted working mode of the robot (10) in the corresponding setting (32, 42).

7. A method in accordance with any of the preceding claims,
**characterized in that**
the determining of at least one of the operating conditions comprises taking an image of at least a part of the corresponding setting (32, 42).

8. A method in accordance with claim 7,
**characterized in that**
the determining of at least one of the operating conditions and/or the comparison of the at least one second operating condition with the corresponding at least one first operating condition is carried out with the use of electronic processing of the taken image.

9. A method in accordance with any of the preceding claims,
**characterized in that**
the determining of the at least one first operating condition, the determining of the at least one second operating condition and the assessing of the second setting is carried out on the basis of a first checklist (80) and a second checklist (82), wherein the first checklist (80) refers to an operator (2) and the second checklist (82) refers to the remaining second working environment (42).

10. A method in accordance with any of the preceding claims,
**characterized in that**
the method (100) is at least partly executed by the robot (10) itself.

11. A method in accordance with any of the preceding claims,
**characterized in that**
at least one of the steps is carried out with the use of artificial intelligence.

12. A method in accordance with any of the preceding claims,
**characterized in that**
a report is generated containing an assessment of the second setting (40).

13. Robot (10) configured to conduct at least a part of a method (100) in accordance with any of the preceding claims.

14. Robot in accordance with claim 13,
**characterized in that**
the robot (10) is configured for human-robot collaboration.
